# FASCICULE DE BREVET EUROPEEN

(11) **EP 0 838 260 B1**
(45) Date de publication et mention de la délivrance du brevet: **02.01.2003**
(21) Numéro de dépôt: 97420189.9
(22) Date de dépôt: 09.10.1997
(51) Int. Cl.: B01F 7/00, B01F 3/04, C12G 1/02

(54) **Dispositif d'aération et d'aspersion de liquides chargés**
Vorrichtung zum Belüften und Spritzen von geladenen Flüssigkeiten
Apparatus for the aeration and spraying of charged liquids

(30) Priorité: 23.10.1996 FR 9613100
(43) Date de publication de la demande: 29.04.1998
(73) Titulaire: Ferrandez, Joseph, 11100 Narbonne (FR)
(72) Inventeur: Ferrandez, Joseph, 11100 Narbonne (FR)
(74) Mandataire: Vuillermoz, Bruno

(56) Documents cités:
- EP-A- 0 033 681
- EP-A- 0 366 644
- DE-A- 4 436 997
- FR-A- 1 510 140
- FR-A- 2 228 107
- FR-A- 2 335 259
- FR-A- 2 359 631
- FR-E- 92 456
- US-A- 3 497 185

## Description

La présente invention concerne un dispositif d'aération, d'aspersion de liquides chargés pouvant amener à l'immersion de la partie solide. Plus particulièrement, en matière de vinification, le dispositif conforme à l'invention est destiné à la réalisation du pigeage du chapeau de marc.

En vinification, la fermentation crée une accumulation des parties solides de la vendange appelé "chapeau de marc" qu'il est nécessaire, pour des besoins oenologiques, d'immerger dans l'élément liquide qui se trouve au dessous.

L'opération d'immersion du chapeau de marc dans l'élément liquide est généralement assurée par pompage dudit liquide dans la partie inférieure des cuves, et aspersion de celui-ci au dessus du chapeau de marc. Une telle opération nécessite l'utilisation de pompes, tuyauteries et autant de pièces fastidieuses à nettoyer. Elle génère aussi le risque de rupture de tuyauteries et la perte du produit.

Il existe une méthode dite de délestage, qui consiste à extraire la totalité des jus d'une cuve pour les réintégrer au dessus du chapeau de marc après les avoir fait transiter par une deuxième cuve. Cette technique présente les mêmes inconvénients que la première mais nécessite en outre la mise en oeuvre d'une cuve supplémentaire et corollairement, son nettoyage.

Certains équipements connus mis en oeuvre pour assurer cette fonction, tels que par exemple des vérins, qui traversent la cheminée d'introduction de la vendange dans la cuve, ou des membranes qui se gonflent dans la cuve, ont par ailleurs le plus souvent leur action limitée à une seule cuve, de sorte qu'équiper une série de cuve avec de tels matériels s'avère d'un coût prohibitif.

FR-E-92456 décrit également un procédé de traitement de liquides chargés.

L'objet de l'invention est de proposer un dispositif d'aération et d'aspersion de liquides chargés, et plus spécifiquement dédié au pigeage du chapeau de marc, s'affranchissant des différents inconvénients précités, facile à réaliser, et qui soit également d'utilisation aisée.

Le dispositif d'aération et d'aspersion de liquides chargés selon l'invention tel que decrit dans la revendication 1 comprend un tube creux destiné à recevoir une turbine mue en rotation au moyen d'un axe central, lui-même actionné par un moteur, ladite partie inférieure du tube étant ajourée de telle sorte à permettre le passage dans un sens ou dans l'autre des liquides chargés de matière à déplacer, fonction du sens de rotation du moteur.

Ce dispositif est muni d'une motorisation qui peut être électrique ou pneumatique, placée verticalement l'axe vers le haut. Avantageusement, le carter du moteur est solidarisé à la partie inférieure du tube.

Par ailleurs, la longueur du tube est légèrement supérieure à la hauteur du chapeau de marc à traiter, ledit tube étant fixé à la partie statique du moteur, la turbine étant placée dans la partie inférieure du tube qui est plongée dans le liquide.

De plus, le dispositif comprend également une collerette de diamètre légèrement inférieur à celui de la cheminée de la cuve, et fixée de manière réglable sur la partie supérieure du tube.

La revendication 8 présente une variante de dispositif selon l'invention.

La présente invention sera mieux comprise à l'aide de la description détaillée qui suit, relative à un mode de réalisation préférentiel donné a titre d'exemple en référence aux dessins annexés dans lesquels :

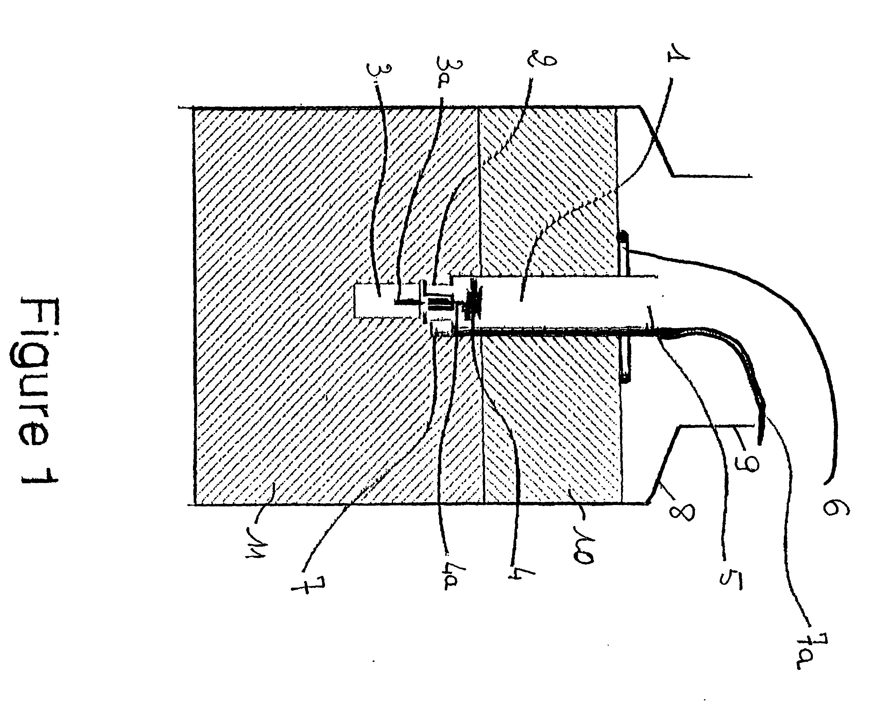

- la figure 1 représente une vue schématique en section du dispositif conforme à l'invention mis en place dans une cuve de vinification ;
- la figure 2 représente une vue schématique en détail de la turbine mis en oeuvre dans ce dispositif.

Bien que plus particulièrement décrit en liaison avec une cuve de vinification, il est bien entendu que l'invention ne saurait se limiter à cette seule application.

Comme on peut le voir sur les dessins, le dispositif est constitué d'un tube creux (1), dont la partie inférieure est reliée au carter d'un moteur (3), l'arbre (3a) de ce dernier s'étendant à l'intérieur du tube (1) et entraînant l'arbre central (4a) d'une turbine (4).

L'ensemble ainsi constitué est mis en place à l'intérieur d'une cuve de vinification (8), et introduit dans celle-ci par la cheminée (9). On peut ainsi observer dans cette cuve le chapeau de marc (10) que l'on souhaite piger, ainsi que les jus (11), chargés en matières en suspension, telles que par exemple des rafles, pépins, etc.

Selon un mode préférentiel de montage, le tube (1) est ajouré en sa partie inférieure de plusieurs ouïes (2), notamment trois, c'est à dire des ouvertures traversantes suffisamment dimensionnées, afin de permettre le passage, dans un sens ou dans l'autre, c'est à dire de l'intérieur vers l'extérieur et vice versa, selon le sens de rotation du moteur, des jus à déplacer chargés de matière.

Les espaces pleins ménagés entre les ouïes (2), et constitués d'une partie de la paroi du tube (1) servent de liaison au carter du moteur (3), positionné coaxialement par rapport au tube (1).

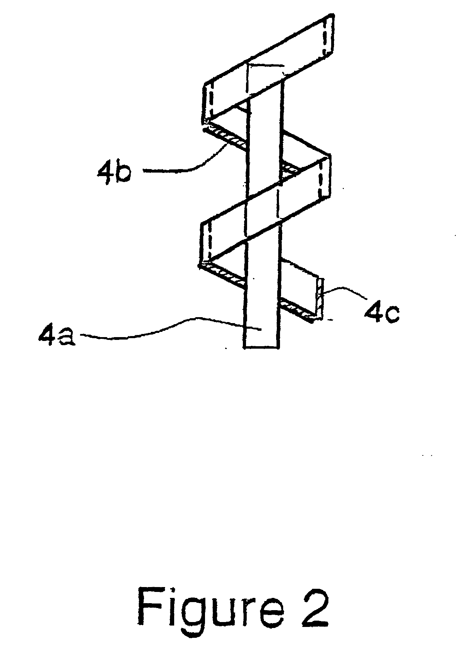

A titre d'exemple la turbine d'entraînement (4) est formée d'une spire hélicoïdale (4b), plus particulièrement représentée sur la figure 2, faisant un ou plusieurs tours sur l'arbre (4a). Une virole, (4c) en forme de serpentin, épouse extérieurement la forme de la spirale, l'ensemble venant glisser juste à l'intérieur du tube (1).

La turbine (4) est donc à même de conférer aux liquides chargés une trajectoire hélicoïdale ascendante ou descendante propre à assurer la dispersion à l'arrivée, c'est à dire en bout de tube desdits liquides, et partant des matières en suspension qu'ils renferment.

Dans la forme de réalisation décrite, le tube est immergé dans la vendange. Dans ce cas, une partie solide demeure en état de flottaison au dessus de la vendange, afin de maintenir le dispositif en place. Le tube (1) est alors pourvu en sa partie supérieure d'une collerette (6) réglable en hauteur, maintenue sur celui-ci par un serrage adéquat.

S'il est nécessaire d'inclure un gaz au produit à traiter, un injecteur (7) est installé au dessous de la turbine (4) qui, par effet de dépression, aspire les gaz ou l'air amené par le tube (7a) obturé si besoin est par une vanne manuelle.

Pour l'utilisation en vinification en rouge, l'ensemble du dispositif est placé verticalement dans la cuve (8) en passant par la cheminée supérieure (9). La partie motorisation, turbine et partie inférieure du tube traversent le chapeau de marc jusqu'à leur immersion dans la partie liquide (11). La collerette prend appui sur le chapeau de marc (10) et maintient la partie supérieure du tube au dessus de la surface du chapeau.

Le dispositif étant mis en place tel que ci-dessus expliqué, la mise en rotation de la turbine fait monter selon une trajectoire hélicoïdale le liquide pour l'envoyer rapidement en forme de corolle au dessus du chapeau de marc (11). Le chapeau ainsi submergé s'enfonce tout seul sous la charge générée par le liquide ainsi dispersé.

Pour la vinification en blanc, et plus particulièrement la mise en suspension des lies, le dispositif immergé dans le liquide, est mis en rotation inversée par rapport au cas précédent, engendrant alors l'aspiration du liquide au niveau de la partie supérieure du tube (1) pour l'insuffler vers le bas, créant ainsi des courants qui "soufflent" et notamment dispersent les particules solides, et notamment les lies.

Au vu de la description qui précède, il ressort que le dispositif de l'invention présente de nombreux avantages, parmi lesquels on peut citer :
- une plus grande efficacité de traitement, qu'il s'agisse du pigeage du chapeau de marc ou de la mise en suspension des lies ;
- une qualité oenologique accrue de ce traitement ;
- une plus grande vitesse d'utilisation ;
- une grande facilité d'utilisation ;
- une simplicité de nettoyage tout particulièrement améliorée : il suffit de rincer le tube et de nettoyer la turbine ;
- la polyvalence du dispositif à tous les types de cuves, de par son faible encombrement.

## Revendications

1. Dispositif d'aération et d'aspersion de liquides chargés, comprenant un tube creux (1) destiné à recevoir une turbine (4) mue en rotation au moyen d'un axe central (4a), lui-même actionné par un moteur (3), ladite partie inférieure du tube présentant des ouvertures traversantes en forme d'ouïes, de telle sorte à permettre le passage dans un sens ou dans l'autre des liquides à déplacer chargés de matières en suspension, fonction du sens de rotation du moteur, la turbine (4) étant constituée de façon telle, qu'elle confère auxdits liquides une trajectoire hélicoïdale ascendante ou descendante afin d'assurer la dispersion de la matière au niveau du lieu d'arrivée des liquides.

2. Dispositif d'aération et d'aspersion de liquides chargés selon la revendication 1, ***caractérisé* en ce que** la turbine (4) est constituée d'une spire hélicoïdale (4b), faisant un ou plusieurs tours par rapport à l'arbre rotatif (4a), et par une virole (4c) en forme de serpentin épousant extérieurement la forme de la spire, l'ensemble ainsi constitué venant juste glisser à l'intérieur du tube creux (1).

3. Dispositif d'aération et d'aspersion de liquides chargés selon l'une des revendications 1 et 2, ***caractérisé* en ce que** les ouvertures traversantes en forme d'ouïes (2) du tube creux (1) sont au nombre de trois, les espaces pleins séparant les ouïes (2) servant d'éléments de solidarisation entre le carter du moteur (3) et la partie inférieure du tube creux (1).

4. Dispositif d'aération et d'aspersion de liquides chargés selon la revendication 3, ***caractérisé* en ce que** les ouvertures traversantes en forme d'ouïes (2) sont suffisamment dimensionnées pour permettre le passage en direction de l'intérieur ou de l'extérieur du tube (1) de tous les corps solides en suspension dans les liquides chargés à traiter.

5. Dispositif d'aération et d'aspersion de liquides chargés selon l'une des revendications 1 à 4, ***caractérisé* en ce que** le moteur est positionné coaxialement par rapport au tube (1).

6. Dispositif d'aération et d'aspersion de liquides chargés selon l'une des revendications 1 à 5, ***caractérisé* en ce que** le tube creux (1) est pourvu en sa partie supérieure d'une collerette (6), réglable en hauteur, maintenu au niveau dudit tube par un serrage adéquat, et destinée à permettre le positionnement dudit tube au sein de l'enceinte renfermant les liquides chargés à traiter.

7. Dispositif d'aération et d'aspersion de liquides chargés selon l'une des revendications 1 à 5, ***caractérisé* en ce qu'**au tube (1) est associé un injecteur (7), destiné à ajouter un gaz au niveau des ouïes (2) du tube (1).

8. Dispositif d'aération et d'aspersion de liquides chargés destiné à réaliser le pigeage du chapeau de marc (10) d'une cuve de vinification (8),
- comprenant un tube creux (1), dont la longueur est légèrement supérieure à la hauteur du chapeau de marc à traiter, et dont l'extrémité inférieure est pourvue d'ouïes (2), destinées au passage des liquides chargés dans un sens ou dans l'autre, ledit tube comportant à l'intérieur une turbine (4) entraînée en rotation au moyen d'un arbre central (4a), lui-même mu par un moteur électrique ou pneumatique (3) coaxial par rapport au tube (1), ledit moteur étant solidarisé à la partie inférieure du tube par le biais de son carter ;
- la turbine (4) étant constituée d'une spire hélicoïdale (4b), faisant un ou plusieurs tours par rapport à l'arbre rotatif (4a), et par une virole (4c) en forme de serpentin épousant extérieurement la forme de la spire, l'ensemble ainsi constitué venant juste glisser à l'intérieur du tube creux (1).

## Patentansprüche

1. Vorrichtung zum Belüften und Versprühen von beladenen Flüssigkeiten, mit einem Hohlrohr (1) zur Aufnahme einer Turbine (4), die mit Hilfe einer Mittelachse (4a), welche ihrerseits über einen Motor (3) angetrieben wird, drehbewegt wird, wobei der untere Teil des Rohres kiemenförmige Durchgangsöffnungen aufweist, so dass der Durchgang der zu bewegenden, mit Schwebstoffen beladenen Flüssigkeiten in der einen oder der anderen Richtung, in Abhängigkeit von der Drehrichtung des Motors, ermöglicht wird, wobei die Turbine (4) derart ausgebildet ist, dass sie den genannten Flüssigkeiten eine aufsteigende oder absteigende spiralförmige Bahn verleiht, um die Verteilung des Stoffes im Bereich der Ankunftsstelle der Flüssigkeiten sicherzustellen.

2. Vorrichtung zum Belüften und Versprühen von beladenen Flüssigkeiten nach Anspruch 1, **dadurch gekennzeichnet, dass** die Turbine (4) von einer sich einmal oder mehrmals um die rotierende Welle (4a) windenden Spiralwendel (4b) sowie durch ein schlangenförmiges Band (4c) gebildet ist, welches außen die Form der Wendel annimmt, wobei die so gebildete Anordnung genau im Inneren des Hohlrohres (1) gleitet.

3. Vorrichtung zum Belüften und Versprühen von beladenen Flüssigkeiten nach einem der Ansprüche 1 und 2, **dadurch gekennzeichnet, dass** das Hohlrohr (1) drei kiemenförmige Durchgangsöffnungen (2) aufweist, wobei die die Kiemenöffnungen (2) trennenden ausgefüllten Räume als Elemente zum festen Verbinden des Gehäuses des Motors (3) mit dem unteren Teil des Hohlrohres (1) dienen.

4. Vorrichtung zum Belüften und Versprühen von beladenen Flüssigkeiten nach Anspruch 3, **dadurch gekennzeichnet, dass** die kiemenförmigen Durchgangsöffnungen (2) ausreichend bemessen sind, um den Durchgang aller in den zu behandelnden beladenen Flüssigkeiten suspendierten Festkörper in das oder aus dem Rohr (1) zu ermöglichen.

5. Vorrichtung zum Belüften und Versprühen von beladenen Flüssigkeiten nach einem der Ansprüche 1 bis 4, **dadurch gekennzeichnet, dass** der Motor koaxial zum Rohr (1) angeordnet ist.

6. Vorrichtung zum Belüften und Versprühen von beladenen Flüssigkeiten nach einem der Ansprüche 1 bis 5, **dadurch gekennzeichnet, dass** das Hohlrohr (1) an seinem oberen Teil mit einem höhenverstellbaren Kragen (6) versehen ist, der durch entsprechendes Festklemmen in Höhe des genannten Rohres gehalten wird und das Anordnen des Rohres innerhalb des die zu behandelnden beladenen Flüssigkeiten einschließenden Raumes ermöglichen soll.

7. Vorrichtung zum Belüften und Versprühen von beladenen Flüssigkeiten nach einem der Ansprüche 1 bis 5, **dadurch gekennzeichnet, dass** dem Rohr (1) eine Einspritzdüse (9) zugeordnet ist, die ein Gas im Bereich der Kiemenöffnungen (2) des Rohres (1) zugeben soll.

8. Vorrichtung zum Belüften und Versprühen von beladenen Flüssigkeiten zur Durchführung der Pigeage des Tresterhutes (10) eines Bottichs zur Weinbereitung (8),
- mit einem Hohlrohr (1), dessen Länge etwas größer ist als die Höhe des zu behandelnden Tresterhutes und dessen unteres Ende mit Kiemenöffnungen (2) für den Durchgang der beladenen Flüssigkeiten in der einen oder der anderen Richtung versehen ist, wobei das genannte Rohr im Inneren eine Turbine (4) enthält, die mit Hilfe einer Mittelachse (4a), welche ihrerseits über einen koaxial zum Rohr (1) angeordneten elektrischen oder pneumatischen Motor (3) bewegt wird, drehangetrieben wird, wobei der genannte Motor mittels seines Gehäuses fest mit dem unteren Teil des Rohres verbunden ist;
- wobei die Turbine (4) von einer sich einmal oder mehrmals um die rotierende Welle (4a) windende Spiralwendel (4b) sowie durch ein schlangenförmiges Band (4c) gebildet ist, welches außen die Form der Wendel annimmt, wobei die so gebildete Anordnung genau im Inneren des Hohlrohres (1) gleitet.

## Claims

1. Device for aerating and sprinkling laden liquids, comprising a hollow tube (1) intended to take a turbine (4) rotated by means of a central shaft (4a) itself operated by a motor (3), the said lower part of the tube having through-openings in the form of apertures so as to allow the liquids to be displaced, which are laden with materials in suspension, to pass through them in one direction or the other depending on the direction of rotation of the motor, the turbine (4) being constructed in such a way that it imparts to the said liquids an upwards or downwards helical path in order to disperse the material at the point of arrival of the liquids.

2. Device for aerating and sprinkling laden liquids according to Claim 1, **characterized in that** the turbine (4) consists of a helical spiral (4b) forming one or more turns with respect to the rotary shaft (4a), and of a ring (4c) in the shape of a serpentine coil which externally matches the shape of the spiral, the assembly thus formed just slipping inside the hollow tube (1).

3. Device for aerating and sprinkling laden liquids according to either of Claims 1 and 2, **characterized in that** there are three of the through-openings in the form of apertures (2) in the hollow tube (1), the solid regions separating the apertures (2) serving as elements for securing the housing of the motor (3) and the lower part of the hollow tube (1) together.

4. Device for aerating and sprinkling laden liquids according to Claim 3, **characterized in that** the through-openings in the form of apertures (2) are of a large enough size to allow all the solid bodies in suspension in the laden liquids to be treated to pass towards the inside or towards the outside of the tube (1).

5. Device for aerating and sprinkling laden liquids according to one of Claims 1 to 4, **characterized in that** the motor is positioned coaxially with respect to the tube (1).

6. Device for aerating and sprinkling laden liquids according to one of Claims 1 to 5, **characterized in that** the hollow tube (1) at its upper part has a height-adjustable collar (6) kept level with the said tube by appropriate clamping means and which is intended to allow the said tube to be positioned within the container that contains the laden liquids to be treated.

7. Device for aerating and sprinkling laden liquids according to one of Claims 1 to 5, **characterized in that** an injector (7) intended to add a gas in the region of the apertures (2) of the tube (1) is associated with the tube (1).

8. Device for aerating and sprinkling laden liquids intended for treading under the cap of marc (10) of a winemaking vat (8):
- comprising a hollow tube (1), the length of which slightly exceeds the height of the cap of marc to be treated, and the lower end of which has apertures (2) intended to allow the laden liquids to pass in one direction or the other, the said tube having inside it a turbine (4) rotated by means of a central shaft (4a) itself driven by an electric or pneumatic motor (3) which is coaxial with the tube (1), the said motor being secured to the lower part of the tube via its housing;
- the turbine (4) consisting of a helical spiral (4b) forming one or more turns with respect to the rotary shaft (4a), and of a ring (4c) in the shape of a serpentine coil which externally matches the shape of the spiral, the assembly thus formed just slipping inside the hollow tube (1).
